# EUROPEAN PATENT APPLICATION

(11) **EP 4 614 824 A1**
(43) Date of publication of application: **10.09.2025**
(21) Application number: 23885078.8
(22) Date of filing: 03.11.2023
(51) Int. Cl.: H04B 7/0456

(54) **CODEBOOK FEEDBACK METHOD, CODEBOOK RECEIVING METHOD, APPARATUS, STORAGE MEDIUM, AND TERMINAL DEVICE**

(30) Priority: 04.11.2022 CN 202211378438
(71) Applicant: Beijing Unisoc Communications Technology Co., Ltd., Beijing 100083 (CN)
(72) Inventor: MA, Dawei, Beijing 100083 (CN)
(74) Representative: Boult Wade Tennant LLP
(86) International application number: PCT/CN2023/129514
(87) International publication number: WO 2024/094153

(57) **Abstract**

The present disclosure provides a codebook feedback method, a codebook receiving method, an apparatus, a storage medium, and a terminal device. The codebook feedback method includes: determining a codebook feedback parameter corresponding to at least two transmitter receiver points, where the codebook feedback parameter includes reporting indication information, the reporting indication information is used to indicate whether to report a first feedback parameter, and the first feedback parameter is used to indicate a position of a non-zero coefficient in a coefficient matrix; and sending the codebook feedback parameter. The technical solution of the present disclosure reduces the feedback overhead of codebook feedback when a plurality of TRPs perform coherent joint transmission.

## Description

This application claims the priority to Chinese patent application No. 202211378438.4, filed with the China National Intellectual Property Administration on November 4, 2022, and entitled "CODEBOOK FEEDBACK METHOD, CODEBOOK RECEIVING METHOD, APPARATUS, STORAGE MEDIUM, AND TERMINAL DEVICE", the entire content of which is incorporated into this application by reference in its entirety.

### TECHNICAL FIELD

The present disclosure relates to the field of communication technologies, and in particular to a codebook feedback method, a codebook receiving method, an apparatus, a storage medium, and a terminal device.

### BACKGROUND

At present, the new radio (New Radio, NR) system have introduced a coherent joint transmission (coherent joint transmission, CJT) mechanism. Under the coherent joint transmission mechanism, a network device can perform coherent joint transmission with a terminal through a plurality of transmitter receiver points (transmitter receiver points, TRPs).

However, the prior art only supports codebook feedback for antenna precoding transmission under a single TRP. If the existing scheme is continued to be used for the coherent joint transmission through a plurality of TRPs, it would result in excessively high feedback overhead.

### SUMMARY

The present disclosure provides a codebook feedback method, a codebook receiving method and an apparatus, which can reduce the feedback overhead of codebook feedback when a plurality of TRPs perform coherent joint transmission.

In order to achieve the aforementioned purpose, the present disclosure provides the following technical solutions:

In a first aspect, a codebook feedback method is provided. The codebook feedback method includes: determining a codebook feedback parameter corresponding to at least two transmitter receiver points, where the codebook feedback parameter includes reporting indication information, the reporting indication information is used to indicate whether to report a first feedback parameter, and the first feedback parameter is used to indicate a position of a non-zero coefficient in a coefficient matrix; and sending the codebook feedback parameter.

Optionally, the reporting indication information includes the total number of non-zero coefficients corresponding to all transmitter receiver points, when the total number is equal to the sum of the coefficients corresponding to all transmitter receiver points, the reporting indication information indicates that first feedback parameters corresponding to all transmitter receiver points are not reported.

Optionally, the determining the codebook feedback parameter corresponding to the at least two transmitter receiver points includes: comparing the total number with a sum of coefficients corresponding to all transmitter receiver points; when the total number is equal to the sum of the coefficients corresponding to all transmitter receiver points, determining that the codebook feedback parameter does not include first feedback parameters corresponding to all transmitter receiver points; when the total number is less than the sum of the coefficients corresponding to all transmitter receiver points, determining that the codebook feedback parameter includes the first feedback parameters corresponding to all transmitter receiver points.

Optionally, the reporting indication information includes the number of non-zero coefficients corresponding to each of the transmitter receiver points, when the number of non-zero coefficients corresponding to a transmitter receiver point is the number of coefficients corresponding to that transmitter receiver point, the reporting indication information indicates that a first feedback parameter corresponding to that transmitter receiver point is not reported.

Optionally, the determining the codebook feedback parameter corresponding to the at least two transmitter receiver points includes: comparing the number of non-zero coefficients corresponding to each of the transmitter receiver points with the number of coefficients corresponding to that transmitter receiver point; when the number of non-zero coefficients corresponding to a transmitter receiver point is equal to the number of coefficients corresponding to that transmitter receiver point, determining that the codebook feedback parameter does not include a first feedback parameter corresponding to that transmitter receiver point; when the number of non-zero coefficients corresponding to a transmitter receiver point is less than the number of coefficients corresponding to that transmitter receiver point, determining that the codebook feedback parameter includes a first feedback parameter corresponding to that transmitter receiver point.

Optionally, the reporting indication information includes transmitter receiver point indication information, the transmitter receiver point indication information indicates a transmitter receiver point that is not required to report a corresponding first feedback parameter, or indicates whether to report a first feedback parameter corresponding to each of the transmission receiving.

Optionally, the determining the codebook feedback parameter corresponding to the at least two transmitter receiver points includes: determining, according to the transmitter receiver point indication information, a transmitter receiver point that is not required to report the corresponding first feedback parameter, and determining that the codebook feedback parameter does not include a first feedback parameter corresponding to that transmitter receiver point.

Optionally, the determining of the codebook feedback parameter corresponding to the at least two transmitter receiver points further includes: determining that the codebook feedback parameter does not include the number of non-zero coefficients corresponding to that transmitter receiver point.

Optionally, the codebook feedback parameter further include a second feedback parameter, a third feedback parameter and a fourth feedback parameter, the second feedback parameter is used to indicate an amplitude of the non-zero coefficient and a phase of the non-zero coefficient, the third feedback parameter is used to indicate a frequency domain beam group, and the fourth feedback parameter is used to indicate a spatial domain beam group.

Optionally, the determining the codebook feedback parameter corresponding to each of the at least two transmitter receiver points includes: acquiring a reference signal to be measured, where the reference signal to be measured is used to measure a channel state of a plurality of candidate transmitter receiver points; measuring the reference signal to be measured, and determining, according to a measurement result, the codebook feedback parameter corresponding to the at least two transmitter receiver points, where the at least two transmitter receiver points are selected from the plurality of candidate transmitter receiver points.

In a second aspect, the present disclosure further discloses a codebook receiving method. The codebook receiving method includes: receiving a codebook feedback parameter corresponding to at least two transmitter receiver points, where the codebook feedback parameter includes reporting indication information, the reporting indication information is used to indicate whether to report a first feedback parameter, and the first feedback parameter is used to indicate a position of a non-zero coefficient in a coefficient matrix.

Optionally, the reporting indication information includes the total number of non-zero coefficients corresponding to all transmitter receiver points, and the method further includes: comparing the total number with a sum of coefficients corresponding to all transmitter receiver points; when the total number is equal to the sum of the coefficients corresponding to all transmitter receiver points, determining that the codebook feedback parameter does not include first feedback parameters corresponding to all transmitter receiver points; when the total number is less than the sum of the coefficients corresponding to all transmitter receiver points, determining that the codebook feedback parameter includes the first feedback parameters corresponding to all transmitter receiver points.

Optionally, the reporting indication information includes the number of non-zero coefficients corresponding to each of the transmitter receiver point, and the method further includes: comparing the number of non-zero coefficients corresponding to each of the transmitter receiver points with the number of coefficients corresponding to that transmitter receiver point; when the number of non-zero coefficients corresponding to a transmitter receiver point is equal to the number of coefficients corresponding to that transmitter receiver point, determining that the codebook feedback parameter of that transmitter receiver point does not include a first feedback parameter corresponding to that transmitter receiver point; when the number of non-zero coefficients corresponding to a transmitter receiver point is less than the number of coefficients corresponding to that transmitter receiver point, determining that the codebook feedback parameter of that transmitter receiver point includes the first feedback parameter corresponding to that transmitter receiver point.

Optionally, the reporting indication information includes transmitter receiver point indication information, the transmitter receiver point indication information indicates a transmitter receiver point that is not required to report a corresponding first feedback parameter, or indicates whether to report a first feedback parameter corresponding to each of the transmission receiving; and the method further includes: determining, according to the transmitter receiver point indication information, the transmitter receiver point that is not required to report the corresponding first feedback parameter, and determining that the codebook feedback parameter does not include a first feedback parameter corresponding to that transmitter receiver point.

In a third aspect, the present disclosure also discloses a communication apparatus. The communication apparatus includes: a processing module, configured to determine a codebook feedback parameter corresponding to at least two transmitter receiver points, where the codebook feedback parameter includes reporting indication information, the reporting indication information is used to indicate whether to report a first feedback parameter, and the first feedback parameter is used to indicate a position of a non-zero coefficient in a coefficient matrix; and a communication module, configured to send the codebook feedback parameter.

In a fourth aspect, the present disclosure further discloses a communication apparatus. The communication apparatus includes: a communication module configured to receive a codebook feedback parameter corresponding to at least two transmitter receiver points, where the codebook feedback parameter includes reporting indication information, the reporting indication information is used to indicate whether to report a first feedback parameter, and the first feedback parameter is used to indicate a position of a non-zero coefficient in a coefficient matrix.

In a fifth aspect, a computer-readable storage medium is provided, where a computer program is stored thereon, and the computer program is run by a processor to execute any method according to the first aspect or the second aspect.

In a sixth aspect, a communication apparatus is provided, including: a memory and a processor, where the memory stores a computer program executable on the processor, the processor runs the computer program to execute any method according to the first aspect.

In a seventh aspect, a communication apparatus is provided, including a memory and a processor, where the memory stores a computer program executable on the processor, the processor runs the computer program to execute any method according to the second aspect.

In an eighth aspect, a computer program product is provided, where a computer program is stored thereon, and the computer program is run by a processor to execute any of the methods according to the first aspect or the second aspect.

In a ninth aspect, a communication system is provided, including the aforementioned terminal device and the aforementioned network device.

In a tenth aspect, an embodiment of the present disclosure further provides a chip (or a data transmission apparatus), where a computer program is stored on the chip, and when the computer program is executed by the chip, the steps of the aforementioned method are implemented.

In an eleventh aspect, an embodiment of the present disclosure further provides a system chip, applied to a terminal device, where the system chip includes at least one processor and an interface circuit, the interface circuit and the at least one processor are interconnected through a line, and the at least one processor is used to execute instructions to execute any one of the methods according to the first aspect or the second aspect of the claims.

Compared with the prior art, the technical solutions of the embodiments of the present disclosure have the following beneficial effects.

In the technical solution of the present disclosure, the reporting indication information is set in the codebook feedback parameter corresponding to at least two transmitter receiver points, and the reporting indication information is used to indicate whether to report a first feedback parameter, and the first feedback parameter is used to indicate a position of a non-zero coefficient in a coefficient matrix. Through the reporting indication information in the codebook feedback parameter, the terminal device does not need to report the position of the non-zero coefficient in the coefficient matrix under certain conditions, thereby reducing the feedback overhead of the codebook feedback as a whole when the plurality of transmitter receiver points perform coherent joint transmission.

Further, the reporting indication information includes the total number of non-zero coefficients corresponding to all transmitter receiver points. In the technical solution of the present disclosure, when the total number of non-zero coefficients is equal to the sum of the coefficients corresponding to all transmitter receiver points, the terminal device does not need to report the first feedback parameters corresponding to all transmitter receiver points, thereby reducing the feedback overhead of the codebook feedback.

Further, the reporting indication information includes the number of non-zero coefficients corresponding to each transmitter receiver point, or the reporting indication information includes the transmitter receiver point indication information. In the technical solution of the present disclosure, when the number of non-zero coefficients corresponding to the transmitter receiver point is the number of coefficients corresponding to that transmitter receiver point, the terminal device does not need to report the first feedback parameter corresponding to that transmitter receiver point, or the terminal device does not need to report the first feedback parameter corresponding to the transmitter receiver point indicated by the transmitter receiver point indication information, so that the reporting control on the first feedback parameter of a single transmitter receiver point can be realized, which further reduces the feedback overhead of the codebook feedback.

### BRIEF DESCRIPTION OF DRAWINGS

FIG. 1 is an interactive flowchart of a codebook feedback method according to an embodiment of the present disclosure.
FIG. 2 is an interactive flowchart of another codebook feedback method according to an embodiment of the present disclosure.
FIG. 3 is an interactive flowchart of still another codebook feedback method according to an embodiment of the present disclosure.
FIG. 4 is an interactive flowchart of still another codebook feedback method according to an embodiment of the present disclosure.
FIG. 5 is a schematic structural diagram of a communication apparatus according to an embodiment of the present disclosure.
FIG. 6 is a hardware schematic structural diagram of a communication apparatus according to an embodiment of the present disclosure.

### DESCRIPTION OF EMBODIMENTS

A communication system applicable to the embodiments of the present disclosure include but is not limited to a long term evolution (long term evolution, LTE) system, a fifth generation (fifth generation, 5G) system, a new radio (new radio, NR) system, and a future evolution system or multiple communication convergence systems. The 5G system can be a non-standalone (Non-StandAlone, NSA) 5G system or a standalone (StandAlone, SA) 5G system. The technical solution of the present disclosure is also applicable to different network architectures, including but not limited to a relay network architecture, a dual link architecture, a vehicle-to-everything architecture and other architectures.

The present disclosure mainly relates to communication between a terminal device and a network device.

The network device in the embodiments of the present disclosure can also be called an access network device. For example, it can be a base station (base station, BS) (also called base station device), and the network device is a device deployed in a radio access network (radio access network, RAN) to provide wireless communication functions. For example, a device that provides base station functions in the 2nd-generation (2nd-generation, 2G) network includes a base transceiver station (base transceiver station, BTS), a device that provides base station functions in the 3rd-generation (3rd-generation, 3G) network includes a NodeB, and a device that provides base station functions in the 4th-generation (4th-generation, 4G) network includes an evolved NodeB (evolved NodeB, eNB). In wireless local area networks (wireless local area networks, WLAN), the device that provides base station functions is an access point (access point, AP), and a device that provides base station functions in NR is a next generation Node Base station (next generation Node Base station, gNB), and an evolved Node B (evolved Node B, ng-eNB). The gNB and the terminal device communicate using a NR technology, and the ng-eNB and the terminal device communicate using an evolved universal terrestrial radio access (evolved universal terrestrial radio access, E-UTRA) technology. Both gNB and ng-eNB can be connected to the 5G core network. The network device in the embodiments of the present disclosure further includes a device that provides base station functions in future new communication systems, etc.

The terminal equipment in the embodiments of the present disclosure may refer to various forms of access terminals, user units, user stations, mobile terminations, mobile stations (mobile station, MS), remote stations, remote terminals, mobile devices, user terminals, wireless communication devices, user agents or user devices. The terminal device may also be a cellular telephone, a cordless telephone, a session initiation protocol (session initiation protocol, SIP) phone, a wireless local loop (Wireless Local Loop, WLL) station, a personal digital assistant (Personal Digital Assistant, PDA), a handheld device with wireless communication functions, a computing device or other processing device connected to a wireless modem, a vehicle-mounted device, a wearable device, a terminal device in a future 5G network, or a terminal device in a future evolved public land mobile network (Public Land Mobile Network, PLMN), etc., which is not limited in the embodiments of the present disclosure. The terminal device may also be referred to as a user equipment (user equipment, UE), a terminal, etc.

As described in the background, the prior art only supports codebook feedback for antenna precoding transmission under a single TRP. If the existing scheme is continued to be used for the coherent joint transmission through a plurality of TRPs, it would result in excessively high feedback overhead.

The present disclosure uses the reporting indication information in the codebook feedback parameter to enable the terminal device to not need to report the position of the non-zero coefficient in the coefficient matrix under certain conditions, thereby reducing the feedback overhead of the codebook feedback as a whole when the plurality of transmitter receiver points perform coherent joint transmission.

In order to make the aforementioned purposes, features and advantages of the present disclosure more obvious and easier to understand, the specific embodiments of the present disclosure are described in detail in conjunction with the accompanying drawings.

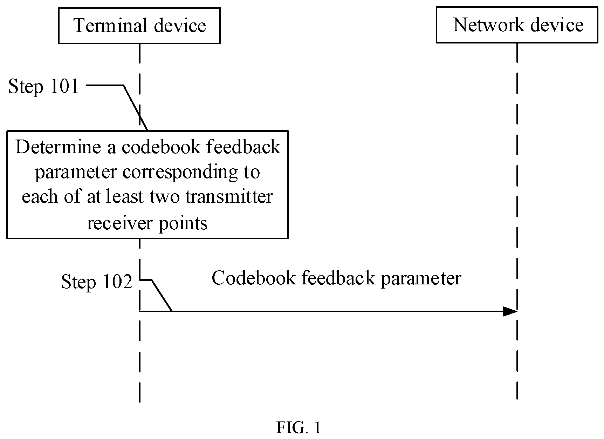

Referring to FIG. 1, the method according to the present disclosure includes:
Step 101: a terminal device determines a codebook feedback parameter corresponding to at least two transmitter receiver points. The codebook feedback parameter includes reporting indication information, the reporting indication information is used to indicate whether to report a first feedback parameter, and the first feedback parameter is used to indicate a position of a non-zero coefficient in a coefficient matrix.
Step 102: the terminal device sends the codebook feedback parameter to the network device.

It can be understood that in the specific implementation, the codebook feedback method can be implemented in the form of a software program, and the software program runs in a processor integrated into a chip or a chip module. The method can also be implemented in the form of software combined with hardware, which is not limited by the present disclosure.

In a specific implementation of step 101, the terminal device acquires a reference signal to be measured, where the reference signal to be measured is used to measure channel states of a plurality of candidate transmitter receiver points; measures the reference signal to be measured, and determines, according to a measurement result, the codebook feedback parameter corresponding to the at least two transmitter receiver points, where the at least two transmitter receiver points are selected from a plurality of candidate transmitter receiver points.

In a specific implementation, the network device can configure a channel state information-reference signal (Channel State Information-Reference Signal, CSI-RS) resource for channel measurement. Specifically, the network device can include a plurality of transmitter receiver points, which are recorded as a plurality of candidate transmitter receiver points. The plurality of candidate transmitter receiver points can be set at different geographical locations. The network device can send a reference signal to be measured (such as a CSI-RS) to the terminal device through the plurality of candidate transmitter receiver points to measure the channel state between each of the candidate transmitter receiver points and the terminal device. The reference signal to be measured corresponds to the candidate transmitter receiver point one by one.

The terminal device can measure each received reference signal to be measured to perform channel estimation on channel states between the terminal device and each of the candidate transmitter receiver points, thereby obtaining a plurality of channel matrices. The channel matrix corresponds to the candidate transmitter receiver points one by one, and each channel matrix is used to indicate the channel state between the corresponding candidate transmitter receiver point and the terminal device.

The transmitter receiver point referred to in the embodiment of the present disclosure may refer to a plurality of transmitter receiver points participating in coherent joint transmission determined by the terminal device from the plurality of candidate transmitter receiver points. The terminal device calculates the codebook feedback parameter according to the channel matrix corresponding to the aforementioned transmitter receiver point. The codebook feedback parameter can be used to calculate the codebook.

The codebook feedback parameter in this embodiment is calculated according to the channel matrices of the plurality of transmitter receiver points at the same time, so coherent joint transmission performed by the plurality of transmitter receiver points can be supported.

In a specific embodiment, the codebook feedback parameter includes a second feedback parameter, a third feedback parameter and a fourth feedback parameter, the second feedback parameter is used to indicate an amplitude of the non-zero coefficient and a phase of the non-zero coefficient, the third feedback parameter is used to indicate a frequency domain beam group, and the fourth feedback parameter is used to indicate a spatial domain beam group.

Content of the codebook feedback parameter is defined by the structure of the codebook. The structure of the codebook W in the present disclosure is W=W₁×W'×W^{H}_{freq}, where W₁ represents a spatial domain beam matrix, W^{H}_{freq} represents a frequency domain beam matrix, and W' represents a linear weighting coefficient matrix. More specifically, a dimension of W₁ can be N_{TX}×(m×L), where m is the number of transmitter receiver points, L is the number of spatial domain beam vectors corresponding to each transmitter receiver point, each of the spatial domain beam vectors is used to represent a spatial domain beam selected by the terminal device, and N_{TX} represents a length of a spatial domain beam vector. A dimension of W^{H}_{freq} can be N×K, where K represents the number of frequency domain beam vectors, each of the frequency domain beam vectors is used to represent a frequency domain beam selected by the terminal device, and N is a length of a frequency domain beam vector.

W' includes a plurality of weighting coefficient matrices, that is, W' is obtained by splicing the plurality of weighting coefficient matrices. A dimension of W' can be (m×L)×K, the dimension of each weighting coefficient matrix can be L×K. The weighting coefficient matrix corresponds to the spatial beam group one by one, and each coefficient in the weighting coefficient matrix corresponds to a spatial beam vector in the spatial beam group corresponding to the weighting coefficient matrix and a frequency domain beam vector in the frequency domain beam group corresponding to the weighting coefficient matrix.

It should be noted that N_{TX}, L, N and K are all pre-configured coefficients, which is not restricted in the present disclosure.

The codebook feedback parameters referred to in this embodiment are parameters corresponding to the spatial domain beam matrix, the frequency domain beam matrix, and the coefficient matrix respectively. Specifically, the codebook feedback parameters include a first feedback parameter, and the first feedback parameter is used to indicate a position of a non-zero coefficient in a coefficient matrix. The codebook feedback parameters further include a second feedback parameter, a third feedback parameter and a fourth feedback parameter. The second feedback parameter is used to indicate an amplitude of the non-zero coefficient and a phase of the non-zero coefficient. The third feedback parameter is used to indicate a frequency domain beam group, such as indicating a group of selected frequency domain beams. The fourth feedback parameter is used to indicate a spatial domain beam group, such as indicating a group of selected spatial domain beams.

In this embodiment, in addition to the aforementioned parameters, the codebook feedback parameters further include reporting indication information. In other words, the terminal device adds a specific parameter (i.e., the reporting indication information) to the codebook feedback parameters to indicate whether to report the first feedback parameter.

If the reporting indication information indicates that the first feedback parameter is not to be reported, the codebook feedback parameters sent by the terminal device to the network device in step 102 do not include the first feedback parameter, which means that the amount of data that the terminal device needs to feedback is reduced and the feedback overhead is reduced.

In a specific implementation, when coefficients in a coefficient matrix corresponding to at least one transmitter receiver point are all non-zero coefficients, the reporting indication information may indicate that the first feedback parameter corresponding to part or all of the transmitter receiver points of the at least one transmitter receiver point is not reported.

If the reporting indication information indicates that the first feedback parameter is to be reported, the codebook feedback parameters sent by the terminal device to the network device in step 102 include the first feedback parameter.

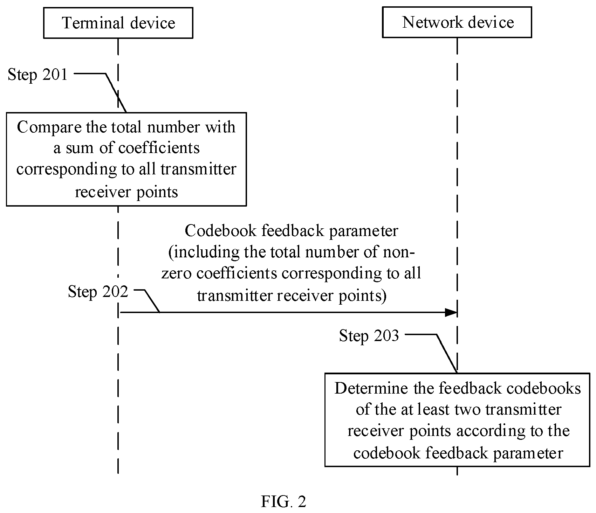

In a specific embodiment, the reporting indication information includes the total number of non-zero coefficients corresponding to all transmitter receiver points. Specifically, the total number may be obtained by the terminal device after the measurement of the reference signal to be measured is completed. FIG. 2 shows an interaction process between the terminal device and the network device in this scenario.

In step 201, the terminal device compares the total number with a sum of coefficients corresponding to all transmitter receiver points. Through the comparison result of step 201, it can be known whether the coefficients corresponding to all transmitter receiver points are all non-zero coefficients.

In step 202, the terminal device sends the codebook feedback parameter to the network device. The codebook feedback parameter includes the total number of non-zero coefficients corresponding to all transmitter receiver points. That is to say, in addition to feeding back the parameters related to the spatial domain beam matrix, the frequency domain beam matrix and the coefficient matrix to the network device, the terminal device also feeds back the total number of non-zero coefficients corresponding to all transmitter receiver points to the network device.

Depending on the comparison result in step 201, the contents of the codebook feedback parameter in step 202 are different.

In one case, if the total number is equal to the sum of the coefficients corresponding to all transmitter receiver points, it means that the coefficients corresponding to all transmitter receiver points are non-zero coefficients. In this case, the codebook feedback parameter does not include the first feedback parameters corresponding to all transmitter receiver points.

In another case, if the total number is less than the sum of the coefficients corresponding to all transmitter receiver points, it means that part of the coefficients corresponding to all transmitter receiver points is non-zero coefficients. In this case, the codebook feedback parameter also includes the first feedback parameters corresponding to all transmitter receiver points. That is to say, at this time, the terminal device needs to feed back the positions of the non-zero coefficients corresponding to all transmitter receiver points in the coefficient matrix to the network device.

In step 203, the network device determines the feedback codebooks of the at least two transmitter receiver points according to the codebook feedback parameter.

Specifically, the network device can determine the spatial domain beam matrix according to the fourth feedback parameter in the codebook feedback parameters. The network device can determine the frequency domain beam matrix according to the third feedback parameter in the codebook feedback parameters. The network device can determine the amplitude of the non-zero coefficients and the phase of the non-zero coefficients in the coefficient matrix according to the second feedback parameter, and determine the positions of the non-zero coefficients in the coefficient matrix according to the first feedback parameter, thereby obtaining a linear weighting coefficient matrix. Alternatively, the network device determines that all coefficients in the linear weighting coefficient matrix are non-zero coefficients according to the reporting indication information, then the network device can determine the amplitude and phase of all non-zero coefficients in the coefficient matrix in combination with the second feedback parameter to obtain a linear weighting coefficient matrix. So far, the network device can obtain a feedback codebook.

It should be noted that the specific implementation method of determining the feedback codebook according to the codebook feedback parameter by the network device can refer to the prior art, which will not be repeated here.

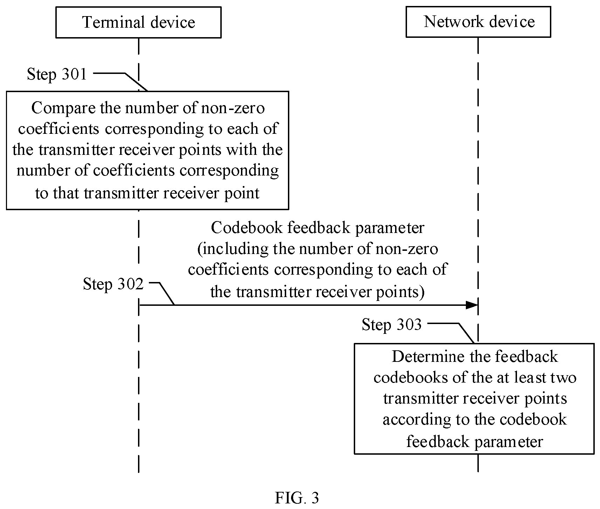

In another specific embodiment, the reporting indication information includes the number of non-zero coefficients corresponding to each of the transmitter receiver points. Specifically, the number may be obtained by the terminal device after the measurement of the reference signal to be measured is completed. FIG. 3 shows an interaction process between the terminal device and the network device in this scenario.

In step 301, the terminal device compares the number of non-zero coefficients corresponding to each of the transmitter receiver points with the number of coefficients corresponding to that transmitter receiver point. Through the comparison result of step 201, it can be known whether the coefficients corresponding to each of the transmitter receiver points are all non-zero coefficients.

In step 302, the terminal device sends the codebook feedback parameter to the network device. The codebook feedback parameter includes the number of non-zero coefficients corresponding to each of the transmitter receiver points. That is to say, in addition to feeding back the parameters related to the spatial domain beam matrix, the frequency domain beam matrix and the coefficient matrix to the network device, the terminal device also feeds back the number of non-zero coefficients corresponding to each of the transmitter receiver points to the network device.

Depending on the comparison result in step 301, the contents of the codebook feedback parameter in step 302 are different.

In one case, if the number of non-zero coefficients corresponding to a transmitter receiver point is equal to the number of coefficients corresponding to that transmitter receiver point, it means that the coefficients corresponding to the transmitter receiver point are all non-zero coefficients. In this case, the codebook feedback parameter does not include a first feedback parameter corresponding to that transmitter receiver point.

For example, transmitter receiver point 1, transmitter receiver point 2 and transmitter receiver point 3 adopt coherent joint transmission. The number of coefficients corresponding to transmitter receiver point 1 is 4, the number of coefficients corresponding to transmitter receiver point 2 is 9, and the number of coefficients corresponding to transmitter receiver point 3 is 12. The terminal device obtains through measurement results that the number of non-zero coefficients corresponding to transmitter receiver point 1 is 4, the number of non-zero coefficients corresponding to transmitter receiver point 2 is 9, and the number of non-zero coefficients corresponding to transmitter receiver point 3 is 10. In this case, the coefficients corresponding to transmitter receiver point 1 and transmitter receiver point 2 are all non-zero coefficients, and the terminal device no longer reports the positions of the non-zero coefficients corresponding to transmitter receiver point 1 and transmitter receiver point 2 in the codebook feedback parameter (that is, the first feedback parameters).

In another case, if the number of non-zero coefficients corresponding to a transmitter receiver point is less than the number of coefficients corresponding to that transmitter receiver point, it means that part of the coefficients corresponding to the transmitter receiver point is non-zero coefficients. In this case, the codebook feedback parameter also includes the first feedback parameter corresponding to that transmitter receiver point. That is to say, at this time, the terminal device needs to feed back the positions of the non-zero coefficients corresponding to that transmitter receiver point in the coefficient matrix to the network device.

In step 303, the network device determines the feedback codebooks of the at least two transmitter receiver points according to the codebook feedback parameter.

The embodiment of the present disclosure can realize the reporting control on the first feedback parameter of a single transmitter receiver point, which further reduces the feedback overhead of the codebook feedback. Further, compared with the case where the coefficients corresponding to all transmitter receiver points are non-zero coefficients, the probability of the case where the coefficients corresponding to a single transmitter receiver point are all non-zero coefficients is greater. By controlling the reporting of the first feedback parameter of a single transmitter receiver point, the probability of reducing the feedback overhead can be increased, and the feedback overhead can be reduced as a whole.

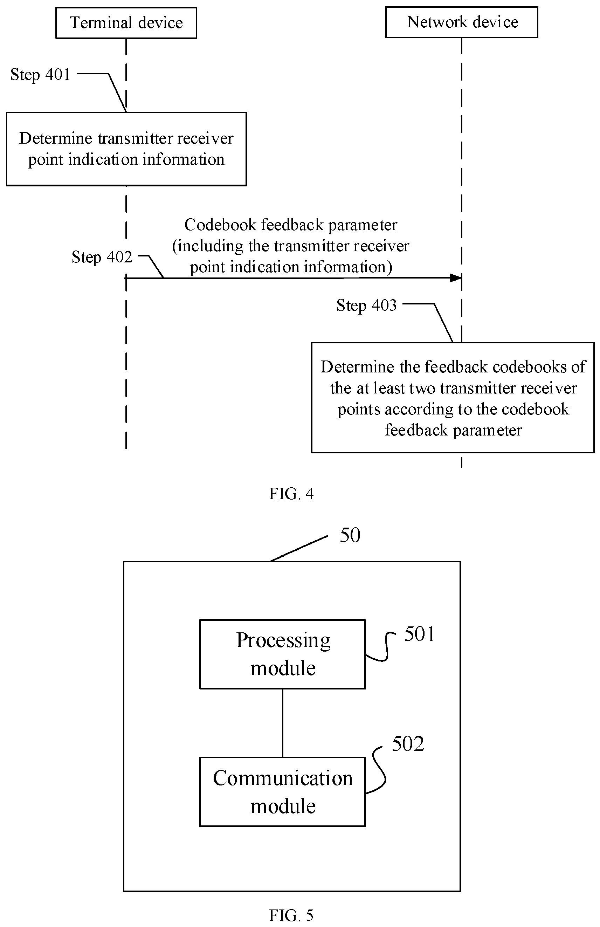

In another specific embodiment, the reporting indication information includes the transmitter receiver point indication information. FIG. 4 shows an interaction process between the terminal device and the network device in this scenario.

In step 401, the terminal device determines the transmitter receiver point indication information. The transmitter receiver point indication information can specifically be an identifier of a transmitter receiver point, or a bitmap (bitmap) of a transmitter receiver point.

In step 402, the terminal device sends the codebook feedback parameter to the network device. The codebook feedback parameter includes transmitter receiver point indication information. That is to say, in addition to feeding back the parameters related to the spatial domain beam matrix, the frequency domain beam matrix and the coefficient matrix to the network device, the terminal device also feeds back the transmitter receiver point indication information to the network device at the same time.

According to the transmitter receiver point indication information in step 401, it can also be determined whether the codebook feedback parameter includes the first feedback parameter, as well as which transmitter receiver points' first feedback parameters are included.

If the transmitter receiver point indication information is the identifier of the transmitter receiver point, the codebook feedback parameter does not include the first feedback parameter corresponding to the transmitter receiver point indicated by the identifier of the transmitter receiver point.

If the transmitter receiver point indication information is a bitmap, each bit in the bitmap corresponds to a transmitter receiver point. For the transmitter receiver point indicated by bit value 1 in the bitmap, the codebook feedback parameter does not include the first feedback parameter corresponding to that transmitter receiver point. For example, when transmitter receiver point 1, transmitter receiver point 2 and transmitter receiver point 3 adopt coherent joint transmission and a bitmap is 110, the terminal device no longer reports the first feedback parameters corresponding to transmitter receiver point 1 and transmitter receiver point 2 in the codebook feedback parameters.

It is also possible that for the transmitter receiver point indicated by the bit value 0 in the bitmap, the codebook feedback parameter does not include the first feedback parameter corresponding to that transmitter receiver point, which is not limited in the present disclosure.

Further, in addition to feeding back the parameters related to the transmitter receiver point indication information, the spatial domain beam matrix, the frequency domain beam matrix and the coefficient matrix to the network device, the terminal device also feeds back the number of non-zero coefficients corresponding to a transmitter receiver point to the network device at the same time. That is to say, the codebook feedback parameter does not include the number of non-zero coefficients corresponding to the transmitter receiver point that does not need to report the corresponding first feedback parameter, and the codebook feedback parameter includes the number of non-zero coefficients corresponding to other transmitter receiver points, and the other transmitter receiver points are the transmitter receiver points other than the transmitter receiver point that does not need to report the corresponding first feedback parameter among at least two transmitter receiver points.

In step 403, the network device determines the feedback codebooks of the at least two transmitter receiver points according to the codebook feedback parameter.

For more specific implementation methods of the embodiments of the present disclosure, please refer to the aforementioned embodiments, which will not be repeated here.

Please refer to FIG. 5, which shows a communication apparatus 50, and the communication apparatus 50 may include:
a processing module 501, configured to determine a codebook feedback parameter corresponding to at least two transmitter receiver points, where the codebook feedback parameter includes reporting indication information, the reporting indication information is used to indicate whether to report a first feedback parameter, and the first feedback parameter is used to indicate a position of a non-zero coefficient in a coefficient matrix;
a communication module 502, configured to send the codebook feedback parameter.

In a specific implementation, the above-mentioned communication apparatus 50 may correspond to a chip with a codebook feedback function in a terminal device, such as a system-on-a-chip (system-on-a-chip, SOC), a baseband chip, etc.; or may correspond to a chip module including a chip with a codebook feedback function in a terminal device; or corresponds to a chip module with a data processing function chip, or may correspond to a terminal device.

In another embodiment, the communication apparatus 50 may include: a communication module 502, configured to receive a codebook feedback parameter corresponding to at least two transmitter receiver points, where the codebook feedback parameter includes reporting indication information, the reporting indication information is used to indicate whether to report a first feedback parameter, and the first feedback parameter is used to indicate a position of a non-zero coefficient in a coefficient matrix.

In a specific implementation, the aforementioned communication apparatus 50 may correspond to a chip having a codebook receiving function in a network device, such as a SOC, a baseband chip, etc.; or may correspond to a chip module having a codebook receiving function in a network device; or may correspond to a chip module having a data processing function chip, or may correspond to a network device.

For other related descriptions of the communication apparatus 50, reference may be made to the related descriptions in the aforementioned embodiments, which will not be repeated here.

For each module/unit included in each device or product described in the aforementioned embodiments, it may be a software module/unit, or a hardware module/unit, or partly a software module/unit and partly a hardware module/unit. For example, for each device or product applied to or integrated in a chip, each module/unit contained therein may be implemented in the form of hardware such as circuits, or at least some of the modules/units may be implemented in the form of software programs, which run on a processor integrated inside the chip, and the remaining (if any) modules/units may be implemented in the form of hardware such as circuits; for each device or product applied to or integrated in a chip module, each module/unit contained therein may be implemented in the form of hardware such as circuits, and different modules/units may be located in the same component (such as a chip, circuit module, etc.) or different components of the chip module, or at least some of the modules/units may be implemented in the form of a software program that runs on a processor integrated inside the chip module, and the remaining (if any) modules/units can be implemented in hardware such as circuits; for various apparatuses and products applied to or integrated in the terminal device, the various modules/units contained therein can be implemented in hardware such as circuits, and different modules/units can be located in the same component (for example, chip, circuit module, etc.) or different components in the terminal device, or at least some of the modules/units can be implemented in the form of a software program that runs on a processor integrated in the terminal device, and the remaining (if any) modules/units can be implemented in hardware such as circuits.

The embodiment of the present disclosure also discloses a storage medium, which is a computer-readable storage medium, on which a computer program is stored, and the steps of the method shown in FIG. 1 to FIG. 4 can be executed when the computer program is executed. The storage medium may include a read-only memory (Read-Only Memory, ROM), a random access memory (Random Access Memory, RAM), a disk or an optical disk, etc. The storage medium may also include a non-volatile memory or a non-transitory memory, etc.

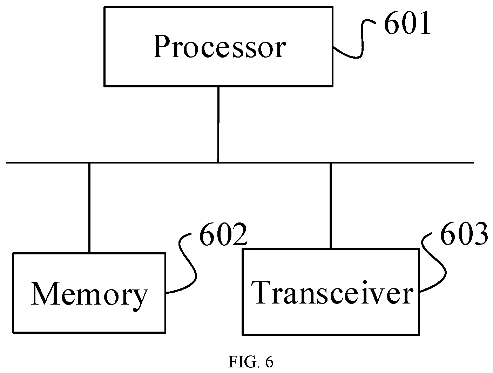

Please refer to FIG. 6, the embodiment of the present disclosure also provides a hardware schematic structural diagram of a communication apparatus. The apparatus includes a processor 601, a memory 602 and a transceiver 603.

The processor 601 may be a general-purpose central processing unit (central processing unit, CPU), a microprocessor, an application-specific integrated circuit (application-specific integrated circuit, ASIC), or one or more integrated circuits for controlling the execution of the program of the present disclosure. The processor 601 may also include a plurality of CPUs, and the processor 601 may be a single-CPU processor or a multi-CPU processor. The processor here may refer to one or more devices, circuits, or processing cores for processing data (such as computer program instructions).

The memory 602 may be a ROM or other types of static storage devices that can store static information and instructions, a RAM or other types of dynamic storage devices that can store information and instructions, or an electrically erasable programmable read-only memory (electrically erasable programmable read-only memory, EEPROM), a compact disc read-only memory (compact disc read-only memory, CD-ROM) or other optical disc storage, optical disc storage (including compressed optical disc, laser disc, optical disc, digital versatile disc, Blu-ray disc, etc.), a magnetic disk storage medium or other magnetic storage device, or any other medium that can be used to carry or store the desired program code in the form of instructions or data structures and can be accessed by a computer, which is not limited in the embodiments of the present disclosure. The memory 602 may exist independently (in this case, the memory 602 may be located outside the apparatus or inside the apparatus), or may be integrated with the processor 601. The memory 602 may contain computer program code. The processor 601 is used to execute the computer program code stored in the memory 602, thereby implementing the methods provided in the embodiments of the present disclosure.

The processor 601, the memory 602 and the transceiver 603 are connected via a bus. The transceiver 603 is used to communicate with other devices or communication networks. Optionally, the transceiver 603 may include a transmitter and a receiver. The device used to implement the receiving function in the transceiver 603 can be regarded as a receiver, and the receiver is used to perform the receiving step in the embodiment of the present disclosure. The device used to implement the sending function in the transceiver 603 can be regarded as a transmitter, and the transmitter is used to perform the sending step in the embodiment of the present disclosure.

When the schematic structural diagram shown in FIG. 6 is used to illustrate the structure of the terminal device involved in the above embodiment, the processor 601 is used to control and manage the actions of the terminal device. For example, the processor 601 is used to support the terminal device to execute step 101 and step 102 in FIG. 1, or step 201 and step 202 in FIG. 2, or step 301 and step 302 in FIG. 3, or step 401 and step 402 in FIG. 4, and/or actions performed by the terminal device in other processes described in the embodiments of the present disclosure. The processor 601 can communicate with other network entities through the transceiver 603, for example, with the above network device. The memory 602 is used to store program codes and data of the terminal device.

When the schematic structural diagram shown in FIG. 6 is used to illustrate the structure of the network device involved in the above embodiment, the processor 601 is used to control and manage the actions of the network device. For example, the processor 601 is used to support the network device to execute step 102 in FIG. 1, or step 202 and step 203 in FIG. 2, or step 302 and step 303 in FIG. 3, or step 402 and step 403 in FIG. 4, and/or actions performed by the network device in other processes described in the embodiments of the present disclosure. The processor 601 can communicate with other network entities through the transceiver 603, for example, with the above terminal device. The memory 602 is used to store program codes and data of the network device.

The embodiment of the present disclosure defines the unidirectional communication link from the access network to the terminal device as a downlink, the data transmitted on the downlink is downlink data, and the transmission direction of downlink data is called a downlink direction; and the unidirectional communication link from the terminal device to the access network is an uplink, the data transmitted on the uplink is uplink data, and the transmission direction of uplink data is called a uplink direction.

It should be understood that the term "and/or" of the present disclosure is merely an association relationship describing associated objects, and represents that there may be three relationships. For example, A and/or B may represent three situations: presence of A only, of both A and B, and of B only. In addition, the character "/" herein represents an "or" relationship between contextual objects.

The "multiple" in the embodiment of the present disclosure refers to two or more.

The first, second, etc. descriptions in the embodiments of the present disclosure are only used for illustration and distinction of the description objects. There is no order, nor do they indicate any special limitation on the number of devices in the embodiments of the present disclosure, and cannot constitute any limitation on the embodiments of the present disclosure.

The "connection" in the embodiments of the present disclosure refers to various connection modes such as direct connection or indirect connection to realize communication between devices, which is not limited in the embodiments of the present disclosure.

The above embodiments can be implemented in whole or in part by software, hardware, firmware or any other combination. When implemented by software, the above embodiments can be implemented in whole or in part in the form of a computer program product. The computer program product includes one or more computer instructions or computer programs. When the computer instructions or computer programs are loaded or executed on a computer, the process or function described in the embodiments of the present disclosure is generated in whole or in part. The computer can be a general-purpose computer, a special-purpose computer, a computer network, or other programmable apparatus. The computer instructions can be stored in a computer-readable storage medium, or transmitted from one computer-readable storage medium to another computer-readable storage medium. For example, the computer instructions can be transmitted from a website, computer, server or data center to another website, computer, server or data center by wire or wireless means.

It should be understood that in various embodiments of the present disclosure, the size of the sequence number of each process does not mean the order of execution. The execution order of each process should be determined by its function and internal logic, and should not constitute any limitation on the implementation process of the embodiment of the present disclosure.

In several embodiments according to the present disclosure, it should be understood that the disclosed methods, apparatuses and systems can be implemented in other ways. For example, the apparatus embodiments described above are only schematic; for example, the division of the units is only a logical function division, and there may be other division methods in actual implementation; for example, multiple units or components can be combined or integrated into another system, or some features can be ignored or not executed. On the other hand, the mutual coupling, direct coupling or communication connection shown or discussed can be indirect coupling or communication connection through some interfaces, devices or units, which can be electrical, mechanical or in other forms.

The units illustrated as separate components may or may not be physically separated, and the components shown as units may or may not be physical units, i.e., they may be located in the same place or may be distributed to a plurality of network units. Some or all of these units may be selected according to practical needs to achieve the purpose of the solution of the present embodiment.

In addition, respective functional units in respective embodiments of the present disclosure may be integrated into one processing unit, or respective units may be included physically separately, or two or more units may be integrated into one unit. The above integrated units can be implemented either in the form of hardware or in the form of hardware as well as software functional units.

The aforementioned integrated unit implemented in the form of a software functional unit can be stored in a computer-readable storage medium. The aforementioned software function unit is stored in a storage medium, and includes several instructions for enabling a computer device (which may be a personal computer, a server, or a network device, etc.) to execute some steps of the method described in each embodiment of the present disclosure.

Although the present disclosure is disclosed as above, the present disclosure is not limited thereto. Any person skilled in the art may make various changes and modifications without departing from the spirit and scope of the present disclosure, so the protection scope of the present disclosure shall be subject to the scope defined by the claims.

## Claims

1. A codebook feedback method, comprising:
determining a codebook feedback parameter corresponding to at least two transmitter receiver points, wherein the codebook feedback parameter comprises reporting indication information, the reporting indication information is used to indicate whether to report a first feedback parameter, and the first feedback parameter is used to indicate a position of a non-zero coefficient in a coefficient matrix; and
sending the codebook feedback parameter.

2. The codebook feedback method according to claim 1, wherein the reporting indication information comprises the total number of non-zero coefficients corresponding to all transmitter receiver points.

3. The codebook feedback method according to claim 2, wherein the determining the codebook feedback parameter corresponding to the at least two transmitter receiver points comprises:
comparing the total number with a sum of coefficients corresponding to all transmitter receiver points;
when the total number is equal to the sum of the coefficients corresponding to all transmitter receiver points, determining that the codebook feedback parameter does not comprise first feedback parameters corresponding to all transmitter receiver points;
when the total number is less than the sum of the coefficients corresponding to all transmitter receiver points, determining that the codebook feedback parameter comprises the first feedback parameters corresponding to all transmitter receiver points.

4. The codebook feedback method according to claim 1, wherein the reporting indication information comprises the number of non-zero coefficients corresponding to each of the transmitter receiver points.

5. The codebook feedback method according to claim 4, wherein the determining the codebook feedback parameter corresponding to the at least two transmitter receiver points comprises:
comparing the number of non-zero coefficients corresponding to each of the transmitter receiver points with the number of coefficients corresponding to that transmitter receiver point;
when the number of non-zero coefficients corresponding to a transmitter receiver point is equal to the number of coefficients corresponding to that transmitter receiver point, determining that the codebook feedback parameter does not comprise a first feedback parameter corresponding to that transmitter receiver point;
when the number of non-zero coefficients corresponding to a transmitter receiver point is less than the number of coefficients corresponding to that transmitter receiver point, determining that the codebook feedback parameter comprises a first feedback parameter corresponding to that transmitter receiver point.

6. The codebook feedback method according to claim 1, wherein the reporting indication information comprises transmitter receiver point indication information, the transmitter receiver point indication information indicates a transmitter receiver point that is not required to report a corresponding first feedback parameter, or indicates whether to report a first feedback parameter corresponding to each of the transmitter receiver points.

7. The codebook feedback method according to claim 6, wherein the determining the codebook feedback parameter corresponding to the at least two transmitter receiver points comprises:
determining, according to the transmitter receiver point indication information, the transmitter receiver point that is not required to report the corresponding first feedback parameter, and determining that the codebook feedback parameter does not comprise a first feedback parameter corresponding to that transmitter receiver point.

8. The codebook feedback method according to claim 7, wherein the determining the codebook feedback parameter corresponding to the at least two transmitter receiver points further comprises:
determining that the codebook feedback parameter does not comprise the number of non-zero coefficients corresponding to that transmitter receiver point.

9. The codebook feedback method according to any one of claims 1 to 8, wherein the codebook feedback parameter further comprise a second feedback parameter, a third feedback parameter and a fourth feedback parameter, the second feedback parameter is used to indicate an amplitude of the non-zero coefficient and a phase of the non-zero coefficient, the third feedback parameter is used to indicate a frequency domain beam group, and the fourth feedback parameter is used to indicate a spatial domain beam group.

10. The codebook feedback method according to any one of claims 1 to 8, wherein the determining the codebook feedback parameter corresponding to each of the at least two transmitter receiver points comprises:
acquiring a reference signal to be measured, wherein the reference signal to be measured is used to measure channel states of a plurality of candidate transmitter receiver points;
measuring the reference signal to be measured, and determining, according to a measurement result, the codebook feedback parameter corresponding to the at least two transmitter receiver points, wherein the at least two transmitter receiver points are selected from the plurality of candidate transmitter receiver points.

11. A codebook receiving method, comprising:
receiving a codebook feedback parameter corresponding to at least two transmitter receiver points, wherein the codebook feedback parameter comprises reporting indication information, the reporting indication information is used to indicate whether to report a first feedback parameter, and the first feedback parameter is used to indicate a position of a non-zero coefficient in a coefficient matrix.

12. The codebook receiving method according to claim 11, wherein the reporting indication information comprises the total number of non-zero coefficients corresponding to all transmitter receiver points, the method further comprises:
comparing the total number with a sum of coefficients corresponding to all transmitter receiver points;
when the total number is equal to the sum of the coefficients corresponding to all transmitter receiver points, determining that the codebook feedback parameter does not comprise first feedback parameters corresponding to all transmitter receiver points;
when the total number is less than the sum of the coefficients corresponding to all transmitter receiver points, determining that the codebook feedback parameter comprises the first feedback parameters corresponding to all transmitter receiver points.

13. The codebook receiving method according to claim 11, wherein the reporting indication information comprises the number of non-zero coefficients corresponding to each of the transmitter receiver points, and the method further comprises:
comparing the number of non-zero coefficients corresponding to each of the transmitter receiver points with the number of coefficients corresponding to that transmitter receiver point;
when the number of non-zero coefficients corresponding to a transmitter receiver point is equal to the number of coefficients corresponding to that transmitter receiver point, determining that the codebook feedback parameter of that transmitter receiver point does not comprise a first feedback parameter corresponding to that transmitter receiver point;
when the number of non-zero coefficients corresponding to a transmitter receiver point is less than the number of coefficients corresponding to that transmitter receiver point, determining that the codebook feedback parameter of that transmitter receiver point comprises the first feedback parameter corresponding to that transmitter receiver point.

14. The codebook receiving method according to claim 11, wherein the reporting indication information comprises transmitter receiver point indication information, the transmitter receiver point indication information indicates a transmitter receiver point that is not required to report a corresponding first feedback parameter, or indicates whether to report a first feedback parameter corresponding to each of the transmission receiving, and the method further comprises:
determining, according to the transmitter receiver point indication information, the transmitter receiver point that is not required to report the corresponding first feedback parameter, and determining that the codebook feedback parameter does not comprise a first feedback parameter corresponding to that transmitter receiver point.

15. A communication apparatus, comprising:
a processing module, configured to determine a codebook feedback parameter corresponding to at least two transmitter receiver points, wherein the codebook feedback parameter comprises reporting indication information, the reporting indication information is used to indicate whether to report a first feedback parameter, and the first feedback parameter is used to indicate a position of a non-zero coefficient in a coefficient matrix; and
a communication module, configured to send the codebook feedback parameter.

16. A communication apparatus, comprising:
a communication module, configured to receive a codebook feedback parameter corresponding to at least two transmitter receiver points, wherein the codebook feedback parameter comprises reporting indication information, the reporting indication information is used to indicate whether to report a first feedback parameter, and the first feedback parameter is used to indicate a position of a non-zero coefficient in a coefficient matrix.

17. A computer-readable storage medium, having a computer program stored thereon, wherein when the computer program is executed by a computer, steps of the codebook feedback method according to any one of claims 1 to 10, or steps of the codebook receiving method according to any one of claims 11 to 14 are implemented.

18. A terminal device, comprising a memory and a processor, wherein the memory stores a computer program executable on the processor, when the processor executes the computer program steps of the codebook feedback method according to any one of claims 1 to 10 are implemented.

19. A network device, comprising a memory and a processor, wherein the memory stores a computer program executable on the processor, when the processor executes the computer program steps of the codebook receiving method according to any one of claims 11 to 14 are implemented.
